# EUROPEAN PATENT APPLICATION

(11) **EP 2 397 360 A1**
(43) Date of publication of application: **21.12.2011**
(21) Application number: 10833080.4
(22) Date of filing: 11.11.2010
(51) Int. Cl.: B60M 7/00, B60L 5/38, B60L 11/18, B60M 1/10, H02J 7/00

(54) **TRANSPORT SYSTEM CAPABLE OF RECHARGING VEHICLES WHILE IN MOTION**

(30) Priority: 24.11.2009 JP 2009283418; 20.12.2009 JP 2009299477; 26.01.2010 JP 2010030620; 25.09.2010 JP 2010230975
(71) Applicant: Kitaguchi, Hiromasa, Komatsu-shi, Ishikawa 923-0303 (JP)
(72) Inventor: Kitaguchi, Hiromasa, Komatsu-shi, Ishikawa 923-0303 (JP)
(74) Representative: Hengelhaupt, Jürgen
(86) International application number: PCT/JP2010/070075
(87) International publication number: WO 2011/065233

(57) **Abstract**

Provide an electric vehicle transportation system that reduces CO₂ emissions and also enables automatic driving to prevent accidents caused by the driver dozing off or losing attention, in light of the situation of late where reduction of CO₂ emissions has become critical to one of the greatest problems causing environmental destruction and where vehicles that use gasoline, diesel oil and other fossil fuels are among the various things that generate a lot of CO₂.

This vehicle transportation system promotes a widespread use of storage-cell-powered vehicles by minimizing the number of storage cells installed on them and thereby reducing their cost. The system involves laying rails that carry current on roads, where only the rails that are passed by vehicles carry current. In addition, the system releases earth leakage current by means of grounding to ensure safety even during rain, so that even storage-cell-powered vehicles can drive long distances by recharging themselves while traveling. Since this is a single-rail system, driving a vehicle becomes much easier and there is also peace of mind because the vehicle can be driven by using the electricity received from the rail to drive the motor, turn on the lights at night, and heat the cabin in winter or cool it in summer, without worrying about electricity running short. At the same time the storage cells are constantly charged to allow for continuous driving as long as there is a rail, and thereby reducing CO₂ generated from such continuous driving.

## Description

### Technical Field

The present invention relates to a rail with a simple structure, where switches are housed in each rail that transmits electricity and wires are passed through the rail and also interconnecting with adjacent rails.

By laying these rails for wide areas, vehicles that carry storage cells designed to reduce CO₂ emissions can be manufactured at lower costs because the number of cells required on each vehicle can be minimized, and this price reduction in turn will help promote widespread use of these vehicles. In this sense, this is a transportation system aimed at reduction of CO₂ emissions by laying on roads a series of rails from which electricity can be drawn and thereby allowing vehicles to recharge their storage cells, while traveling, to generate drive power.

A hall element or proximity sensor is installed inside the rail, so that when a vehicle approaches or passes by, this hall element or proximity sensor is actuated to cause a control element to issue an instruction to connect or disconnect the main switch. The rail is structured in such a way that if the front part of the vehicle passes by and the charging is started, but the vehicle subsequently stops or changes lanes or otherwise goes out of the current lane and its rear part does not pass by the hall element or proximity sensor, the main switch will be turned off to shut down the charge using a timer. The rail is powered off when there is no vehicle, and also grounded, to ensure safety.

Because it allows for recharging while a vehicle is traveling, this transportation system helps reduce CO₂ emissions by reducing the time the vehicle owner must wait for recharging, thereby promoting the use of electric vehicles.

### Prior Art

Manufacturers of conventional storage-cell-powered vehicles are trying to increase the maximum driving distance by improving the performance of expensive storage cells, but because these cells use expensive materials such as rare metals, there is a fear that these materials will become scarce in supply and their costs will escalate in the future.

There is a known technology developed prior to the present invention (Patent Literature 1).
When this known technology and the present invention are compared for differences, the first embodiment of the known technology requires the phase of electricity applied to the rail (such as positive or negative phase of direct current) to be determined by the control circuit every time a vehicle passes by. With the present invention, on the other hand, only a simple operation of turning on/off the control circuit is required because the phase does not change. In the second embodiment of the known technology, nothing is contained in the rail. With the present invention, the control circuit can be built into the rail because the circuit is simple. The third embodiment of the known technology requires a control circuit for each rail. On the contrary, the present invention allows several rails of the same phase to be joined so that a long rail, consisting of several rails connected together, can be controlled with a single set of circuits, thus reducing the number of control circuits, etc. Based on the above and other differences, the known technology is not suitable when the rails are short because the cost will become high, while the present invention can be applied to accommodate vehicles of various lengths from light vehicles whose overall length is short, to large-size vehicles, and is therefore advantageous in terms of implementation in practical settings.

### Prior Art Literature

### Patent Literature

Patent Literature 1: Translation of PCT Patent Application No. Hei 4-506947

### Summary of the Invention

### Problems to Be Solved by the Invention

As mentioned above, continuous use of fossil fuel as we have done to date will surely make global warming a more serious issue in the future.
To solve this problem, it is desirable that we first reduce the amount of storage cells installed on vehicles so that these vehicles can be offered at lower cost, thereby promoting their widespread use.
However, this rail system has not enjoyed a high market penetration so far because the users are likely to avoid using the system due to the inconvenience associated with the necessity of driving along the rails.

In addition, this system of supplying electricity through electrical rails presents a fear that its safety may be lost during rain due to earth leakage, and there have been calls for further study.
For the electricity used to recharge storage cells, it goes without saying that favorable sources include hydropower, wind power, solar power harnessed by photovoltaic cells, etc., and other natural sources of energy that generate little or no CO₂ emission, as well as nuclear generation, geothermal generation and other generation technologies that will become feasible in the future such as nuclear fusion generation.

On the other hand, it is also desirable that the market penetration of electric vehicles be raised by minimizing the manufacturing cost of these rails and covering roads with rails for the longest distance possible, which in turn reduces the generation of CO₂.

In light of the aforementioned problems, the present invention aims to provide an electric vehicle transportation system that achieves significant reduction of CO₂ emissions and allows vehicles to recharge while traveling and therefore drive a longer distance, wherein said system enables automatic driving and thereby reduces accidents caused by the driver dozing off, can be manufactured at lower cost, and has a lower risk of earth leakage.

### Means for Solving the Problems

The electrical rail, constituted by a long enclosure rail and a series of top rails on top that are connected together by insulating the seams, is laid on the road, while wheels and magnets are installed underneath the electric vehicle to allow electricity to be drawn from the rail. As the magnet approaches the entry side of the top rail, the conductive strip in the enclosure rail is attracted and the grounding point and the top rail become separated, as a result of which the grounding point of the top rail is shielded while the conductive strip adheres to the top rail to conduct electricity. Even after the magnet has passed, the electricity drawn from the top rail allows the solenoid coil to keep attracting the plunger and the retention plate supports the conductive strip to let electricity flow continuously to the top rail.

When the magnet reaches the exit side of the top rail, the shield plate is raised and the power supply to the solenoid coil is cut off, upon which the plunger that has been attracted returns to its original position and the retention plate comes down. The conductive strip also comes down and separates from the top rail, and the electricity is cut off.

As the conductive strip comes down and the grounding strip contacts the grounding wire and the terminal projecting from the top rail, the top rail is grounded. In other words, this system prevents danger by supplying power only to the rail underneath each vehicle and by grounding other rails away from the vehicle, thereby ensuring that the top rail is always grounded except when the power is supplied.
Wheels and magnets are lowered from the vehicle. The wheels serve two purposes: one, to contact the top rail and draw in electricity to drive the motor to let the vehicle travel and the other, to recharge the storage cells.

With the single-rail system under Claim 3, wires are passed in the enclosure rail with insulated seams and one of the two phases is connected in one rail, while the other phase is connected in the next rail. This is then repeated so that the two phases are connected alternately by making sure the length of each rail plus the insulating members match the pitch between the power collectors in front of and at rear of the vehicle, because, this way, the vehicle can move forward by collecting powers of opposite phases alternately. In addition, once the vehicle moves away from each rail, the power supply to that rail is cut off. This series of operations is repeated between the vehicle and each rail, and the vehicle is allowed to recharge itself as it moves forward.

The front power collector draws electricity from the rail in front via a hall element or proximity sensor, while the rear power collector cuts off the power supply from the subsequent rail according to a timer. The vehicle travels on the rails charged with powers of different phases, by picking up these powers via the power collectors located in front of and at the rear of the vehicle.
There are several ways in which the power supply can be connected to and cut off from the rail by the front power collector. Some examples of combinations are explained below.

Example 1 is a method to generate electromagnetic waves at the front power collector and turn on the power to the top rail using the main switch. To cut off the power, a timer is used to turn off the power.
Example 2 is a method to irradiate electromagnetic waves to the front power collector and turn on the power to the top rail using the main switch, while irradiating electromagnetic waves of a different electromagnetic wave frequency to the rear power collector, and a separate hall element provided for each power collector is used to actuate the main switch to turn off the power to the top rail.
Example 3 is a method to use different materials for the front and rear power collectors, while providing, and operating, separate proximity sensors to turn on and off the power.
The above are examples of the several combinations available.

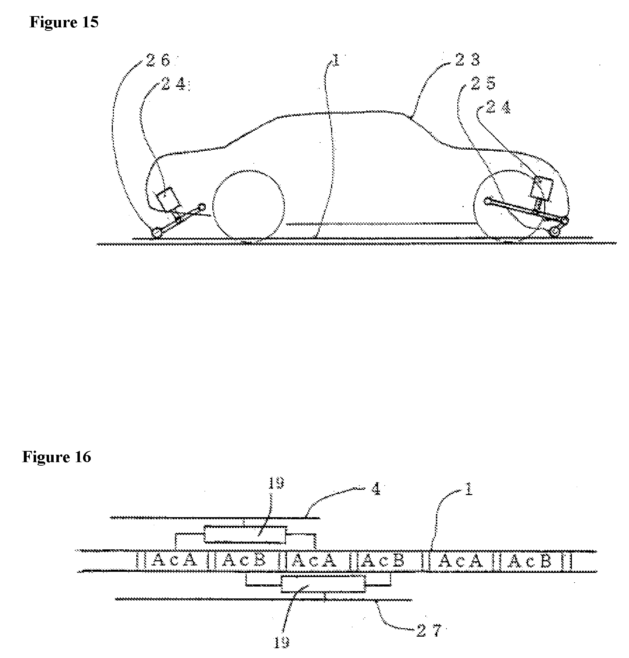

Under Claim 3, each rail, which is a main feature of the present invention, always has a fixed phase (such as positive phase in the case of direct current), and accordingly two or more rails of the same phase can be joined and operated with a single set of main switches to reduce the number of control devices (control components) such as main switches, as shown in Fig. 16. This way, fewer control devices such as main switches are required.

In areas where the rails cannot be laid, or on roads where there are no rails, the vehicle drives using the electricity stored in the storage cells.
On the other hand, the electric vehicle system according to Claim 5 consists of top rails and grounding rails arranged alternately via insulation materials. The grounding rail is not connected to any control component, such as main switch or proximity sensor, and only the wire on the grounding side is connected. Since each rail has a fixed phase (such as positive phase in the case of direct current), no control component such as a main switch is required on the grounding side and if two or more rails of the same phase are joined using conductive wires, these rails do not require control components and thus the manufacturing cost of rails can be reduced.

### Effects of the Invention

Since fossil fuel is not used, CO₂ emissions can be reduced significantly.
By adopting this electrical rail system, vehicles can continue driving as long as there are rails and can achieve significantly longer drive distances while recharging. There are no worries about electricity running out while driving with illumination on at night, heating on in winter, cooling on in summer, etc.
Since the top rail only houses the conductive strips, retention devices, solenoid coil circuit breakers and wires, the electrical rails under the present invention can be simplified and manufactured at low cost.

If the rails extend sufficiently, the use of storage cells is infrequent and thus the number of storage cells installed on vehicle can be reduced.
When the magnets and wheels for drawing electricity into the electric vehicle are guided to the rail, what happens is that as the magnets and wheels move to positions above the rail as a result of steering-wheel operation, the left/right sensor is actuated and the wheel up/down drive unit is used to lower both the magnets and wheels onto the rail, after which the vehicle can be operated automatically via the automatic driving assist system where the left/right sensor is used to operate the steering wheel slightly.

Where there are no vehicles, the rails are grounded. Accordingly, safety is ensured against earth leakage during rain because the rails do not carry electricity.
In areas where laying rails is difficult, vehicles can drive using electricity stored in their storage cells despite an absence of rails.
The system can be applied to golf carts by laying rails throughout the golf course and allowing the storage cells installed on golf carts to be recharged while the golfers are playing golf. This way, time no longer needs to be spent recharging the golf cars.
The rails can be used as guide rails for the automatic driving system, where use of the automatic driving system reduces the fatigue of the driver from driving, and consequently reduces accidents caused by the driver dozing off or losing attention.

These rails can be used instead of overhead wiring for electric railcars. Since electric railcars are long, all rails carrying electricity are kept underneath the traveling railcars and thus a high level of safety is ensured. However, measures must be taken in regions where it snows.
When this system is applied to tram systems in cities, a quiet, clean city landscape can be maintained. Air in the city becomes cleaner and the city becomes a healthier, more livable place.

### Brief Description of the Drawings

- [Fig. 1]: Plan view pertaining to Claims 1 and 2;
- [Fig. 2]: Side view pertaining to Claims 1 and 2;
- [Fig. 3]: Side view pertaining to Claims 1 and 2;
- [Fig. 4]: Section view of Fig. 3, cut across A-A;
- [Fig. 5]: Section view of Fig. 2, cut across B-B;
- [Fig. 6]: Section view showing a part of the proximity sensor under Claim 2;
- [Fig. 7]: Plan view pertaining to Claim 2;
- [Fig. 8]: Component layout and electrical wiring diagram for Claim 2;
- [Fig. 9]: Overview pertaining to Claims 1 and 2;
- [Fig. 10]: Plan view pertaining to Claim 3;
- [Fig. 11]: Component layout and electrical wiring diagram for Claim 3;
- [Fig. 12]: Section view pertaining to Claim 3;
- [Fig. 13]: Drawing showing the sequence of the two-phase power supply under Claim 3;
- [Fig. 14]: Drawing explaining the two-phase power supply under Claim 3;
- [Fig. 15]: Overview pertaining to Claim 3;
- [Fig. 16]: Drawing showing an example of switch saving under Claim 3;
- [Fig. 17]: Front view showing an example of raising the power collector under Claim 3;
- [Fig. 18]: Side view showing an example of raising the power collector under Claim 3;
- [Fig. 19]: Plan view showing an example of reducing the cost of road construction work under Claim 3;
- [Fig. 20]: Section view, as seen from the side, showing an example of reducing the cost of road construction work under Claim 3;
- [Fig. 21]: Drawing showing an example of connection method under Claim 3;
- [Fig. 22]: Section view of Fig. 21, cut across A-A;
- [Fig. 23]: Section view of Fig. 21, cut across B-B;
- [Fig. 24]: Plan view of the rail-detecting power collector under Claim 4;
- [Fig. 25]: Side view of the rail-detecting power collector under Claim 4;
- [Fig. 26]: Side view of the probe and brush power collector under Claim 4, showing a condition where power is not collected;
- [Fig. 27]: Side view of the probe and brush power collector under Claim 4, showing a condition where detection of a rail is in progress in a location where there is a rail;
- [Fig. 28]: Side view of the probe and brush power collector under Claim 4, showing a condition where a search for a rail is in progress in a location where there is no rail;
- [Fig. 29]: Side view of the probe and brush power collector under Claim 4, showing a condition where power is being collected;
- [Fig. 30]: Plan view of the probe and brush power collector under Claim 4;
- [Fig. 31]: Section view pertaining to Claim 4, showing the road surface and rail on the same plane;
- [Fig. 32]: Plan view pertaining to Claim 5;
- [Fig. 33]: Side view pertaining to Claim 5;
- [Fig. 34]: Drawing explaining an application example of Claim 5;
- [Fig. 35]: Detail view of the main switch under Claim 5.

### Best Mode for Carrying Out the Invention

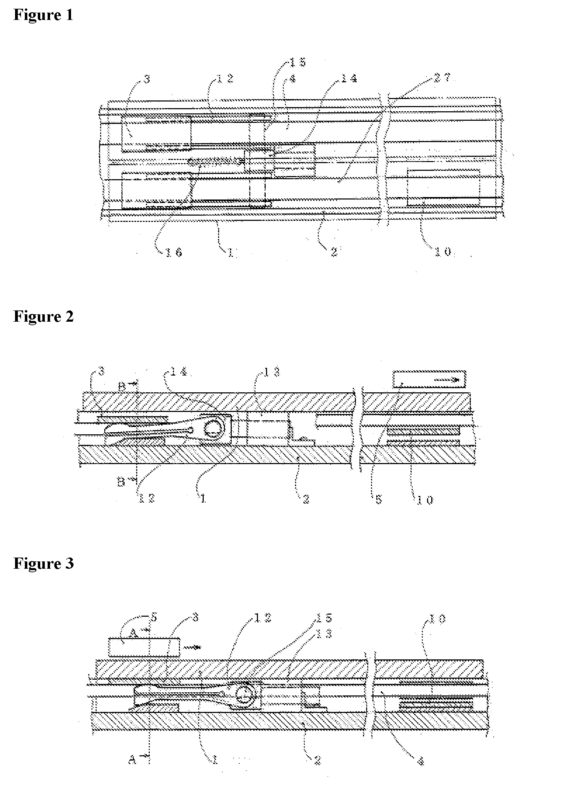

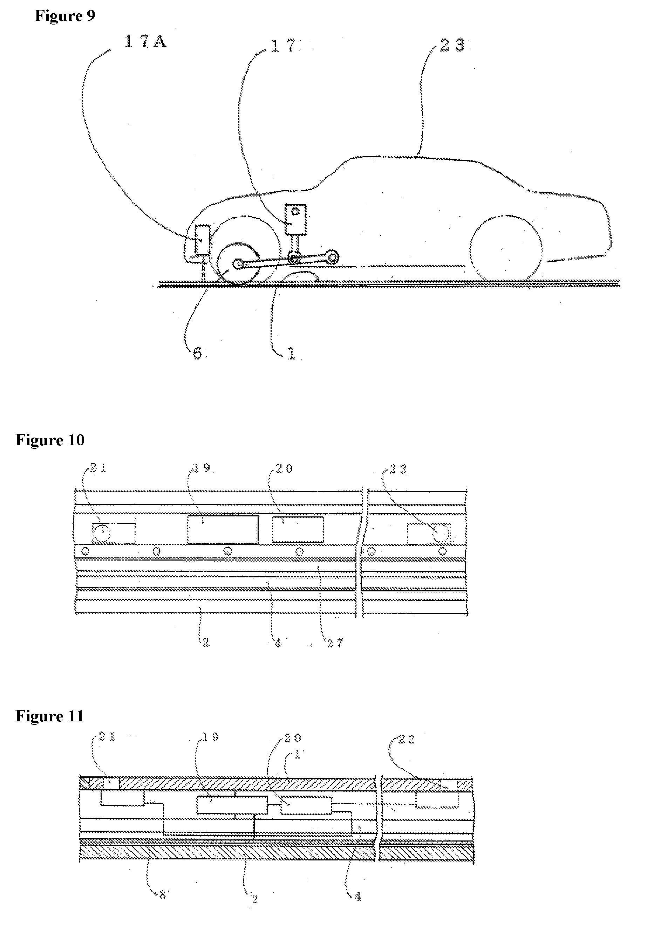

The constitutions illustrated in Figs. 1 to 9 are explained.
1 indicates the top rail; 2 indicates the enclosure rail; 3 indicates the conductive strip; 4 indicates wire A; 5 indicates the magnet; 6 indicates the wheel that moves up and down together with the magnet 5; 7 indicates the grounding strip; 8 indicates the grounding wire; 9 indicates the insulation plate; 10 indicates the shield plate; 11 indicates the terminal; 12 indicates the retention plate made of an insulation material; 13 indicates the solenoid coil; 14 indicates the plunger; 15 indicates the retention-plate installation bar being an insulation material, 16 indicates the spring; and 17 indicates the wheel up/down drive unit. 18 indicates the insulating separation band that separates the two polarities of electricity; 19 indicates the main switch under the electrical system; and 20 indicates the control element including a timer. 21 indicates proximity sensor A; 22 indicates proximity sensor B that reacts to magnetism and transmits it to the control element 20; and 23 indicates the vehicle.

Embodiments of the present invention are explained below using Figs. 1 to 9.
The top rails 1 are arranged with their ends insulated and installed on top of the enclosure rail 2. The conductive strip 3 is connected to wire 4, and when attracted to the magnet 5 near the vehicle entry position of the top rail 1, the conductive strip 3 adheres to the top rail 1 and transmits the electricity of wire A 4 to the top rail 1 and solenoid coil 13, with the retention plate 12 maintaining the connection of the conductive strip 3 so that the conductive strip 3 will remain connected even after the magnet 5 moves away.

As the magnet on the vehicle passes the exit side of the top rail 1, the shield plate 10 is raised and the electrical circuit of the solenoid coil 13 is turned off, whereupon the plunger 14 returns and the retention plate 12 also returns, thereby causing the connection of the conductive strip 3 to be released and the power supply to be cut off. At the same time, the top rail 1 is grounded at the terminal 11, via the grounding strip 7, from the grounding wire 8.

17 indicates the wheel up/down drive unit, where this drive unit is used to raise the magnet 5 and wheel 6 and thereby separate them from the rail to turn off the power. 17A indicates the left/right sensor that detects the rail from the vehicle.
Under the direct-current system, one wheel is connected to positive electricity, while the other wheel is connected to negative ground.

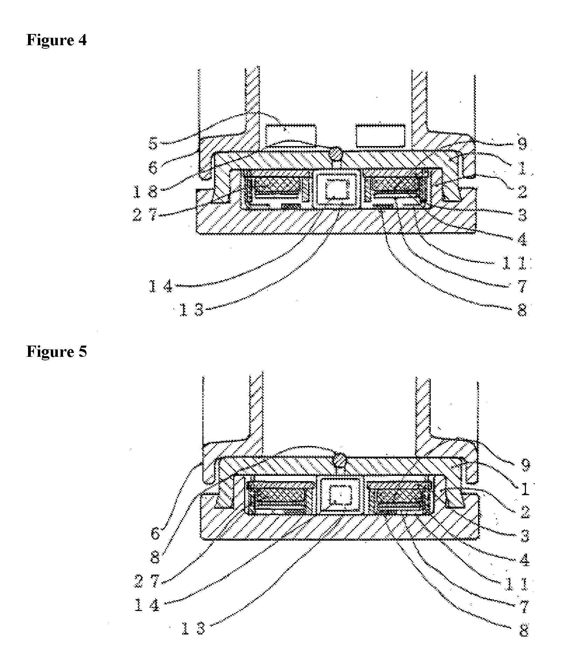

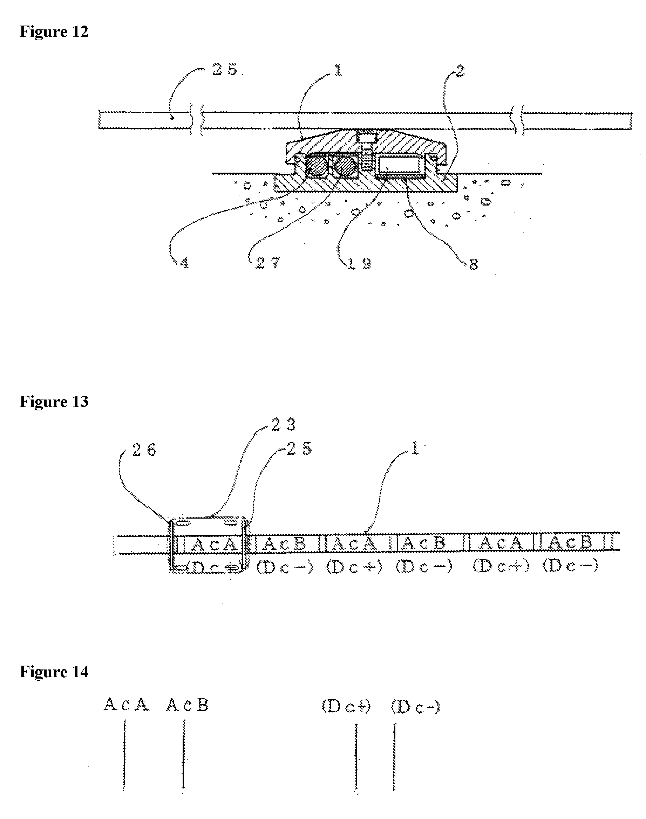

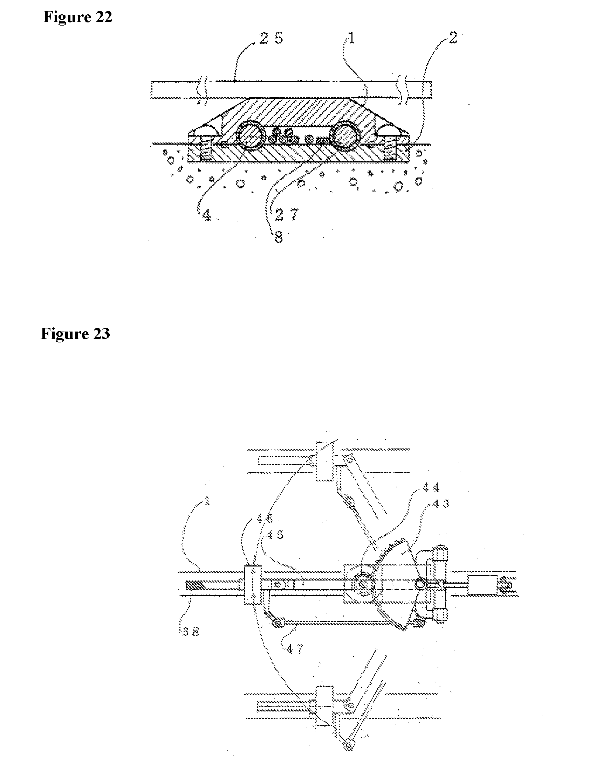

Next, Figs. 4 to 23 are explained in relation to Claim 3. Note that some components not relating to Claim 3, such as the solenoid coil 13, are shown in Figs. 4 to 6.

1 indicates the top rail; 2 indicates the enclosure rail; 4 indicates wire A; 8 indicates the grounding wire; 9 indicates the insulation plate; 11 indicates the terminal; 19 indicates the main switch; and 20 indicates the control element including a timer. 21 indicates proximity sensor A; 22 indicates proximity sensor B; 23 indicates the vehicle; 24 indicates the power collector up/down drive unit; 25 indicates the front power collector; 26 indicates the rear power collector; 27 indicates wire B; and 28 indicates the rail detection sensor which is used by the raised system to detect a rail and lower the power collector onto the rail.

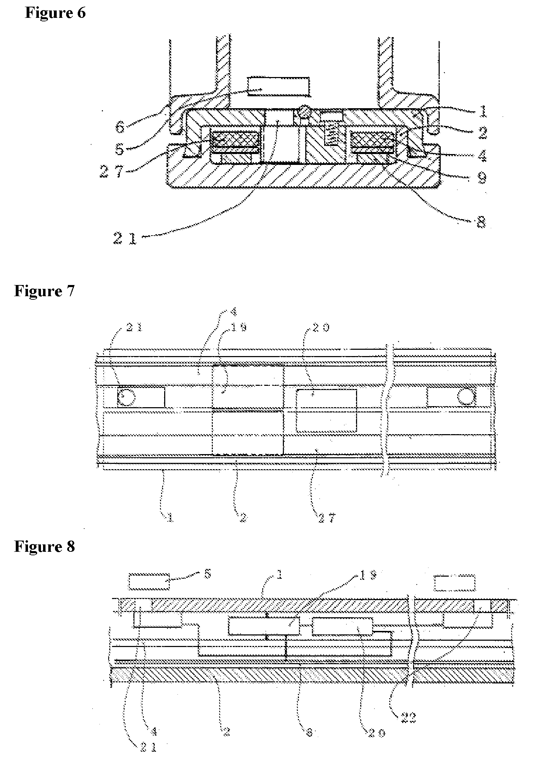

Next, operations under Claim 3 are explained based on Figs. 6 to 18.
As the front power collector 25 reaches the end of the top rail 1, proximity sensor A 21 senses the front power collector 25 and actuates the control element 20 to connect the top rail 1 and wire A 4 via the main switch 19 so that the power is supplied to the top rail 1. At this time, the rear power collector 26 reaches proximity sensor B 22 and the connection is cut off between the top rail 1 already passed by the vehicle on one hand, and wire A 4 on the other, using the main switch 19, while at the same time the top rail 1 is grounded.

24 indicates the power collector up/down drive unit for moving the power collector up and down, where this drive unit is used to separate the power collector from the rail and thereby turn off the power, and 23 indicates the vehicle.

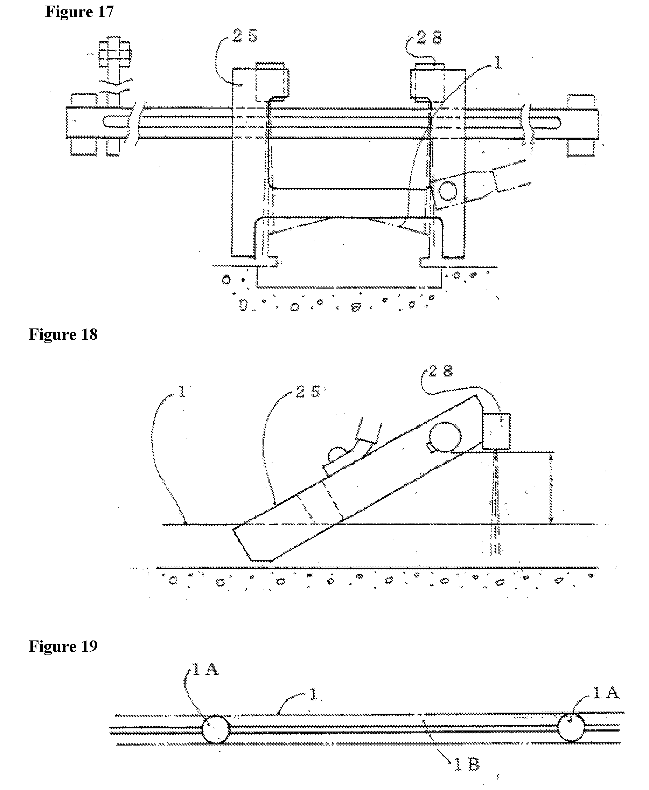

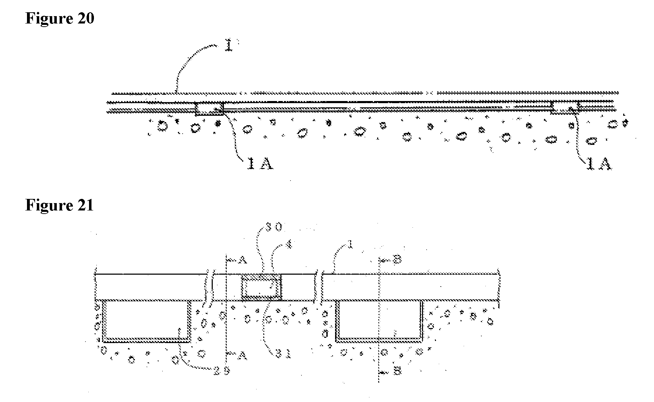

Figs. 17 to 20 are explained. In Figs. 17 and 18, the power collector 25 has been raised to increase the clearance from the road surface. In Figs. 19 and 20, the rail is not buried, so as to minimize the processing cost relating to the road surface in order to reduce the construction cost; instead, holes 1A are provided where each hole houses the main switch chamber storing the main switch, proximity sensor, control element, etc., and if the pitch of these holes is long, a lateral-shift prevention groove is provided to improve the bending strength of the rail or a shallow groove 1B is made to allow the rail to sink in slightly, so that the rail can be kept thin and need not be buried in the road surface and consequently the cost can be reduced.

Figs. 21 to 23 illustrate a system whereby rails of the single-rail system under Claim 3 are produced at a factory and assembled on site, wherein the joint 31 is one of knife-switch connection type in this example and the main switch chamber 29 is also shown.

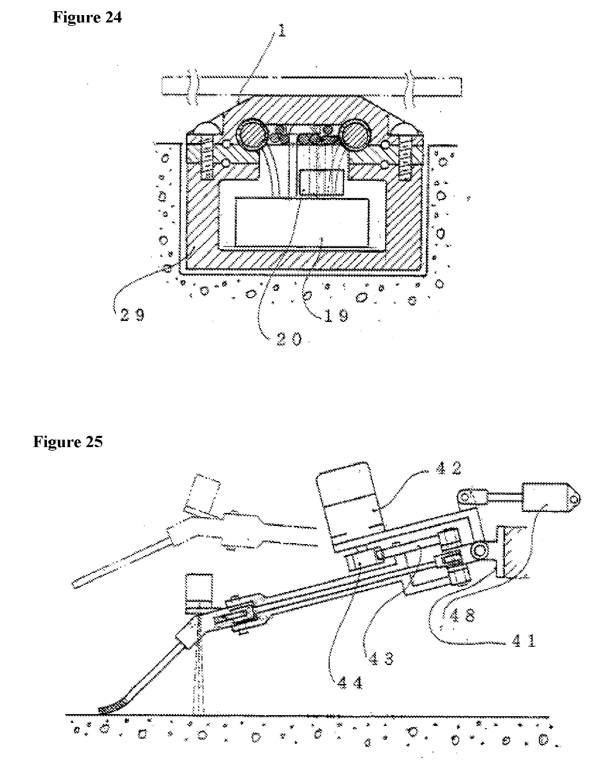

Figs. 24 and 25 illustrate a system whereby, when the road surface is flush with the top surface of the rail, the rail detector 46 is used to guide the brush 38 onto the rail.

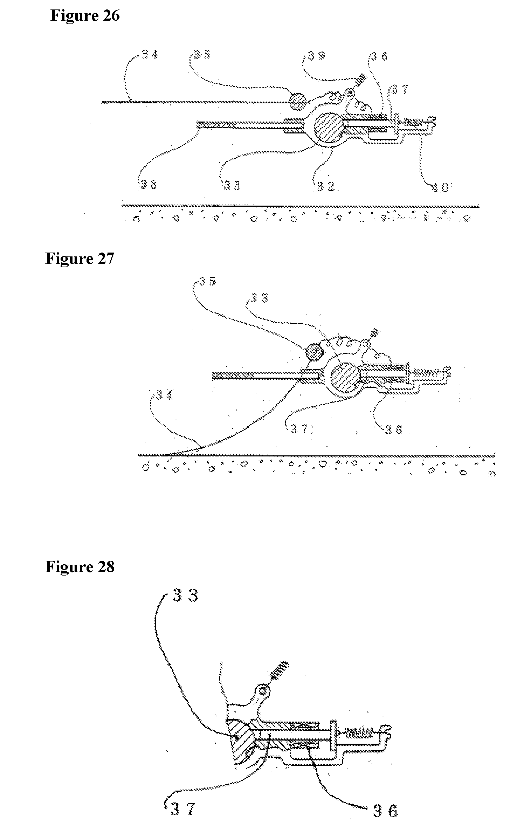

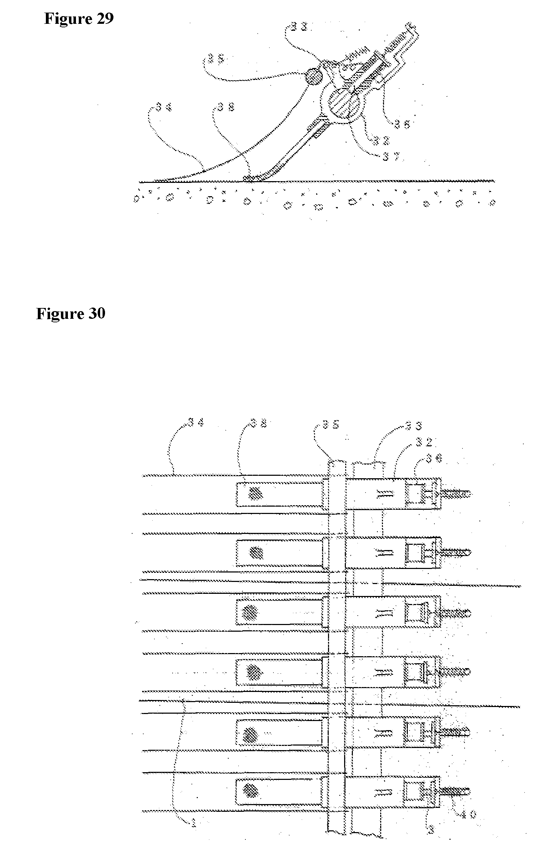

Figs. 26 to 30 illustrate a power collector that, when the road surface is flush with the top surface of the rail, the probe 34 is used to notify the brush 38 at the position where the rail makes contact, in order to take electricity from the rail.

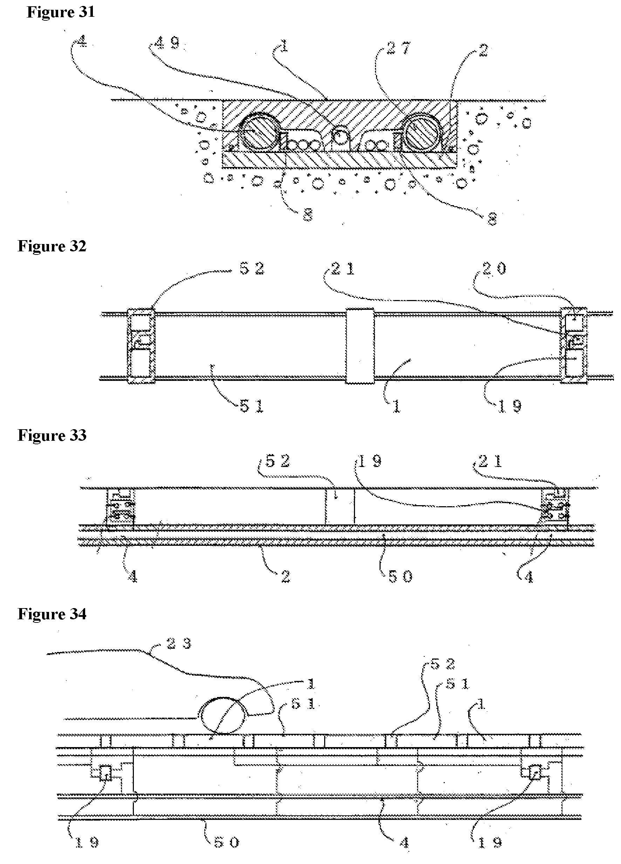

Fig. 31 is a section view when the road surface is flush with the top surface of the rail.

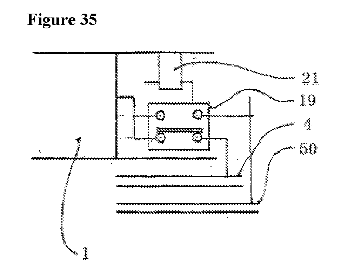

Next, the constitution of Claim 5 is explained using Figs. 32 to 35.
1 indicates the top rail; 51 indicates the rail on the grounding side; 4 indicates wire A; 50 indicates the wire on the grounding side; 52 indicates the insulation material; 19 indicates the main switch; 20 indicates the control element; 21 indicates proximity sensor A; 23 indicates the vehicle; and 2 indicates the enclosure rail.
The conductive top rails 1 are arranged and installed on top of the enclosure rail in the moving direction of the vehicle in a manner alternating with the conductive rails on grounding side 51, where the ends are insulated by the insulation materials 52. Wire A 4 is a long wire which is inserted in the enclosure rail 2 and running over a long distance in parallel with the wire on grounding side 50.
The rails on grounding side 51 are connected to the wire on grounding side 50.

Power collectors (refer to Fig. 15) are installed in two locations at the front and rear of the vehicle 23, where one of these power collectors (such as the front power collector 25) is electrically contacting the top rail 1, while the other power collector (such as the rear power collector 26) is contacting the rail on grounding side 51, to allow for recharging while the vehicle is traveling.
As the vehicle 23 approaches, proximity sensor A 21 detects it and issues a command to the control element 20.
The control element 20 actuates the main switch 19 to allow for energization of the top rail 1 via wire A 4, and when the specified time elapses, or specifically when the vehicle 23 has passed the rail, the timer function is triggered to actuate the main switch 19 again to cut off the energization of the top rail 1 via wire A 4.
It should be noted that, instead of cutting off the energization using the timer function, it is possible to use proximity sensor A 21 to detect the passing of the vehicle 23 to cut off the energization accordingly.

### Industrial Field of Application

This vehicle transportation system is significantly effective in reducing CO₂ emissions, and furthermore the proposed system can be implemented immediately, presenting little or no drawbacks. On the other hand, research to improve the performance of storage cells is still ongoing and whether or not it will lead to success is not certain at the present. Accordingly, given the situation where a deadline for a CO₂ reduction goal has already been set, it is risky to concentrate all our hope on the approach of improving performance of storage cells. Instead, it is more secure to tackle the challenge from two angles, one using the proposed system and the other in the form of improving the performance of storage cells, with implementation of the proposed system starting immediately. It is hoped that in the future when the need for securing electricity through natural energy sources is expected to grow, this system will develop further and enable automatic driving to realize fatigue-free driving and accident prevention, while improving the environment, so that the earth will once again become a paradise for mankind where we can live comfortably.

### Description of the Symbols

- 1: Top rail
- 2: Enclosure rail
- 3: Conductive strip
- 4: Wire A
- 5: Magnet
- 6: Wheel
- 7: Grounding strip
- 8: Grounding wire
- 9: Insulation plate
- 10: Shield plate
- 11: Terminal
- 12: Retention plate
- 13: Solenoid coil
- 14: Plunger
- 15: Retention-plate installation bar
- 16: Spring
- 17: Wheel up/down drive unit
- 18: Insulating separation band
- 19: Main switch
- 20: Control element
- 21: Proximity sensor A
- 22: Proximity sensor B
- 23: Vehicle
- 24: Power collector up/down drive unit
- 25: Front power collector
- 26: Rear power collector
- 27: Wire B
- 28: Rail detection sensor
- 29: Main switch chamber
- 30: Insulating member
- 31: Joint
- 32: Brush holder
- 33: Swing bar
- 34: Probe
- 35: Probe bar
- 36: Solenoid coil
- 37: Plunger
- 38: Brush
- 39: Spring
- 40: Spring
- 41: Base
- 42: Rail detection drive unit
- 43: Segment gear
- 44: Pinion
- 45: Swing arm
- 46: Rail detector
- 47: Parallel bar
- 48: Up/down actuator
- 49: Snow-melting heater
- 50: Wire on grounding side
- 51: Rail on grounding side
- 52: Insulation material

## Claims

1. An electric vehicle transportation system that allows for recharging of vehicles while traveling, wherein said electric vehicle transportation system uses electric rails whose structure is such that: Top rails each made of a non-magnetic material being a good conductor offering conductive property are installed on a long, groove-shaped rail made of an insulation material, with the rails forming the shape of an enclosure; a conductive strip which is a good conductor that can be attracted to a magnet in the enclosure on the vehicle entry side of the top rail is connected to a flexible wire, with an insulated grounding strip attached to the bottom side of the wire; and the grounding strip is used to cause a grounding wire installed/passing at the bottom area to contact a terminal connected to the top rail in order to ground the top rail; wherein, as the magnet installed on the vehicle passes by the conductive strip, the conductive strip is attracted and the grounding point of the top rail is shielded so that the conductive strip connects to the top rail and the current is carried between the two, upon which the solenoid coil generates attraction force to retain the conductive strip via a retention plate, and as the magnet moves toward the exit side of the top rail, a shield plate is attracted and consequently the solenoid coil circuit is turned off and the retention plate separates the conductive strip from the top rail to cut off the energization, as a result of which the top rail is connected to the ground to release earth leakage current and thereby ensure safety.

2. An electric vehicle transportation system that allows for recharging of vehicles while traveling, wherein, in order to electrically demonstrate the function under Claim 1, said electric vehicle transportation system uses electric rails that are equipped with:
a circuit in the enclosure on the vehicle entry side where the magnetic force of an external magnet or other detection target is detected by a detection device constituted by a hall element or proximity sensor, upon which the connection between the top rail made of a conductive material and the ground is cut off by a main switch according to a command from a control element, while the top rail is connected to a wire via the main switch to carry current between the two so that this condition will be retained electrically even after the detection target moves away; and
a circuit where the retention circuit on the entry side is cut off by a detection device that reacts when the detection target reaches the exit side so as to cut off the energization between the wire and top rail and, if the retention circuit is not cut off within a specified time because the vehicle has changed lanes or stopped or otherwise failed to pass the exit side, a timer is used to cut off the retention circuit to turn off the energization and allow the top rail to be connected to the grounding point.

3. An electric vehicle transportation system that allows for recharging of vehicles while traveling, wherein said electric vehicle transportation system is such that: Top rails each made of a conductive material are installed on an insulated, long groove-shaped rail by insulating the connections between rails; a hall element or proximity sensor is built into the enclosure, along with a wire, grounding point, and control element including a timer; a main switch that actuates according to a command from the control element is housed in the enclosure, where the main switch is capable of switching between a mode where the top rail and wire are connected and a mode where the top rail and the grounding point are connected; the first rail is connected to one electrical phase, while the next rail is connected to the opposite phase, with each phase having a fixed phase that cannot be changed to the opposite phase; wherein structurally the rails are arranged in such a way that, in the case of direct current, for example, the positive phase and negative phase are alternated and the power to each rail is cut off as the rail is passed by the vehicle, and that the length of the rail plus insulation materials matches the pitch between the front and rear power collectors installed on the vehicle so that the two front and rear power collectors are used to pick up electricity from the rails and supply it to the vehicle, and also that these rails can be used as guides for automatic driving of vehicles, as well.

4. An electric vehicle transportation system according to Claim 3, wherein the power collectors are designed to accommodate the top surface of the rail positioned flush with the road surface, and wherein a rail detector is used to guide a brush to a position over the rail and then a probe is used to detect the rail and allow the brush over the rail to contact the rail so as to take electricity into the vehicle to be supplied to the driving motor and recharge it.

5. An electric vehicle transportation system that allows for recharging of vehicles while traveling, wherein said electric vehicle transportation system is such that: Top rails each made of a conductive material are arranged alternately with rails on a grounding side, via insulation materials, in the moving direction of the vehicle; a proximity sensor that detects an approaching vehicle is positioned between the top rail and wire, along with a main switch that controls the electrical connection between the top rail and wire according to a command received from a control element; the rail on the grounding side is connected to a wire on the grounding side, where the aforementioned main switch, proximity sensor or any other control component is not required and not connected to the rail on the grounding side; and one of the two power collectors positioned at the front and rear of the vehicle connects electrically to the aforementioned top rail, while the other power collector contacts the aforementioned rail on the grounding side.
